# EUROPÄISCHE PATENTSCHRIFT

(11) **EP 1 504 651 B1**
(45) Veröffentlichungstag und Bekanntmachung des Hinweises auf die Patenterteilung: **30.05.2018**
(21) Anmeldenummer: 04017058.1
(22) Anmeldetag: 20.07.2004
(51) Int. Cl.: A01F 12/40, A01D 41/12

(54) **Verfahren und Vorrichtung zum Betreiben einer Erntegutzerkleinerungs- und -verteileinrichtung**
Method and apparatus for operating the spreader and chopper on a combined harvester
Procédé et appareil pour actionner le hache-paille et le répartisseur d'une moissonneuse-batteuse

(30) Priorität: 08.08.2003 DE 10336772
(43) Veröffentlichungstag der Anmeldung: 09.02.2005
(73) Patentinhaber: CLAAS Selbstfahrende Erntemaschinen GmbH, 33428 Harsewinkel (DE)
(72) Erfinder: Niermann, Martin, 33428 Harsewinkel (DE); Brinkmann, Jörn, 33428 Harsewinkel (DE)

(56) Entgegenhaltungen:
- EP-A- 0 537 621
- EP-A- 0 993 764
- DE-C- 3 827 236
- US-A- 5 569 081

## Beschreibung

Die Erfindungen betrifft ein Verfahren und eine Vorrichtung zum Betreiben einer Erntegutzerkleinerungs- und -verteilvorrichtung gemäß dem Oberbegriff der Ansprüche1 und 7.
Eine derartige Verteilereinrichtung für Häcksler ist aus der DE 38 38 936 bekannt. Die symmetrisch aufgebaute Verteileinrichtung besitzt Leitbleche, die an Ihren dem Häcksler zugewandten Enden um Achsen schwenkbar gelagert sind. Über zwei Stellleisten sind zwei Gruppen von Leitblechen miteinander gekoppelt. Jede Stellleiste ist an einem Stellhebel angelenkt, wobei der Stellhebel mit einer Koppelstange längsverschieblich und durch Anschläge begrenzt verbunden ist, um das Streubild abhängig von der Windrichtung und der Hangneigung zu ändern. Die Änderung des Streubilds verhindert, dass während der Erntefahrt Häckselgut in den neben der Fahrspur stehenden Bestand gefördert wird. Dieses dann im Bestand liegende Häckselgut würde beim Mähen der nächsten Spur des Bestandes ein weiteres Mal in den Mähdrescher gelangen und damit unnötigerweise Durchsatzleistung des Mähdreschers in Anspruch nehmen. Aus diesem Grund wird durch die Verstellung der Leitbleche das Streubild derart verändert, dass zwischen dem abgeerntetes Feldstück mit verteiltem Häckselgut und dem Bestand ein Streifen abgeerntetes Feldstück ohne Häckselgut verbleibt. Dieser Streifen wird beim Mähen der nächsten Spur überdeckt, so dass nach dem Ernten an jeder Stelle Häckselgut auf dem abgeerntetem Feld liegt. Für eine anschließend bodenschonende Einarbeitung des Häckselgutes in den Feldboden ist eine gleichschichtige Verteilung des Häckselgutes auf dem abgeerntetem Feldstück Bedingung.
Nachteilig bei dieser Verteileinrichtung ist, dass das auf dem Feld verteilte Häckselgut nicht in einer gleichmäßigen Materialschichtdicke auf dem Feld verteilt wird, wenn die Leitbleche das Häckselgut umlenken und dass der Bediener die Verstellung der Leitbleche manuell vornehmen muss.

Die DE 38 27 236 C1 offenbart eine Vorrichtung für ein Streuaggregat für einen Häck-Iser an einem Mähdrescher. Das Streuaggregat weist mehrere aus einem federelastischen Material hergestellte flexible Leitbleche auf, die durch eine Stelleinrichtung verstellbar sind, um deren Wurfrichtung zu ändern und damit die Streubreite des Streuaggregates zu verstellen. Auch dieses Streuaggragat weist den Nachteil auf, dass das Häckselgut nicht in einer gleichmäßigen Schichtdicke auf dem Feld verteilt wird.

Der vorliegenden Erfindung liegt daher die Aufgabe zugrunde, ein Verfahren und eine Vorrichtung zu entwickeln, bei der die Häckselgutmenge in einer gleichmäßigen Materialschichtdicke auf dem Feld verteilt wird.

Diese Aufgabe wird erfindungsgemäß durch die kennzeichnenden Merkmale der Ansprüche 1 und 7 gelöst. Weitere vorteilhafte Ausführungen des Erfindungsgegenstandes ergeben sich aus den nachgeordneten Ansprüchen.

Indem die aus dem Häckselorgan austretende Häckselgutmenge zumindest im Austrittsbereich der Erntegutverteileinrichtung in Abhängigkeit von der Lage und/oder Geometrie des Streubilds änderbar ist, kann die Häckselgutmenge gleichmäßig auf eine Streubreite verteilt werden.

Vorteilhafterweise wird die Abgabe des Häckselgutes im Austrittsbereich der Erntegutverteileinrichtung durch die veränderbare Position der Leitbleche bestimmt, wodurch der bauliche Aufwand sehr gering gehalten wird.

Dadurch, dass die Lage und/ oder Geometrie des Streubildes durch die veränderbare Position der Leitbleche bestimmt wird, lenken die Leitbleche die Häckselgutmenge in die gewünschten Richtungen.

Dadurch dass die Leitbleche die Häckselgutmenge proportional zur Geometrie des Streubildes verteilen, wobei die Häckselgutmenge über eine vom dem Streubild bestimmte Streubreite annähernd homogen verteilt wird, liegt das Häckselgut in einer gleichmäßigen Schichtdicke auf dem abgeerntetem Feld.

Indem die Verteileinrichtung eine Neutralachse aufweist, in der die Häckselgutmenge nicht umgelenkt wird, wobei die rechts- und linksseitig der Neutralachse angeordneten Leitbleche eine Gutumlenkung bewirken, gelangt an jede Stelle der Streubreite eine Häckselgutmenge.

Die Verlagerung der Neutralachse erfolgt vorteilhafterweise durch die Verstellung der Leitbleche.

Dadurch, dass das Streubild vorteilhafterweise durch rechte und linke Begrenzungspunkte definiert ist und die Neutralachse sich stets von dem weiter nach Außen bewegendem Begrenzungspunkt wegbewegt, erhöht sich die auf die Seite des sich nach Außen bewegenden Begrenzungspunkts geförderte Häckselgutmenge.

Dadurch, dass die Vorrichtung aus lageveränderlichen Leitblechen besteht, die über einen Verstellhebel verschwenkbar miteinander gekoppelt sind und der Verstellhebel von einem Stellglied antreibbar geführt wird, wobei die aus dem Häckselorgan austretende Häckselgutmenge zumindest im Austrittsbereich der Erntegutverteileinrichtung in Abhängigkeit von der Lage und/ oder Geometrie des Streubilds änderbar ist, kann die Häckselgutmenge gleichmäßig auf die Streubreite verteilt werden. Dies gewährleistet eine gleichmäßige Schichtdicke des Häckselgutes auf der Austragsfläche.

Ein besonders guter Häckselgutmengenfluß wird dadurch erreicht, dass die auf einer Seite der Neutralachse angeordneten Leitbleche parallel verlaufen und zwischen benachbarten Leitblechen auf einer Seite ein konstanter Durchgangsquerschnitt besteht.

Die Zunahme der Länge der Leitbleche zur Außenseite des Ablenkgehäuses bewirkt, dass die Häckselgutmenge an den Außenseiten länger geführt wird.

Weitere vorteilhafte Ausgestaltungen sind Gegenstand weiterer Unteransprüche und werden nachfolgend anhand von Zeichnungen näher erläutert.

Es zeigen:
Fig.1 die schematische Draufsicht auf einen Mähdrescher bei der Erntefahrt,
Fig.2 eine Seitenansicht eines rückwärtigen Ausschnittes eines Mähdreschers Fig.2 eine Draufsicht auf einen Anbauhäcksler.

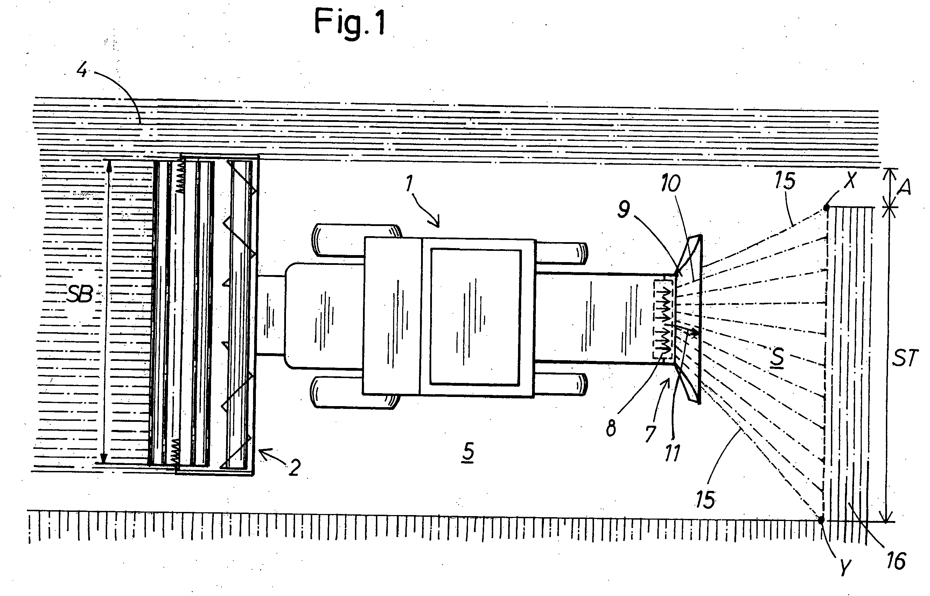

In Fig.1 ist die schematische Draufsicht eines Mähdreschers 1 bei der Erntefahrt dargestellt. Am Mähdrescher 1 ist frontseitig ein Schneidwerk 2 mit einer Schnittbreite SB angeordnet. In Erntefahrtrichtung rechts vom Mähdrescher 1 und vor dem Schneidwerk 2 steht der noch zu erntende Bestand 4. In Erntefahrtrichtung links vom Mähdrescher 1 und hinter dem Mähdrescher 1 befindet sich das abgeerntete Feld 5. An der Heckseite des Mähdreschers 1 ist ein Anbauhäcksler 7 angeordnet, der aus einem Häckselorgan 8 besteht an das sich eine Verteileinrichtung 9 anschließt. In der Verteileinrichtung 9 sind mehrere Leitbleche 10 angeordnet, die eine vom Häckselorgan 8 zugeführte Häckselgutmenge 11 im Austrittsbereich 14 der Verteileinrichtung 9 umlenken und verteilen. Hinter der Verteileinrichtung 9 sind mehrere in unterschiedliche Richtungen weisende Flugbahnen 15 der Häckselgutmenge 11 strichpunktiert dargestellt. Die Enden X, Y der beiden äußeren Flugbahnen 15 begrenzen eine Streubreite ST, die einen Abstand A vom Bestand 4 entfernt ist. Dieser Abstand A wird durch die Verstellung der Leitbleche 10 verändert. In Erntefahrtrichtung hinter der Streubreite ST befindet sich die Austragsfläche 16, auf der bereits Häckselgutmenge 11 gleichschichtig verteilt liegt. Der Austrittbereich 14 der Verteileinrichtung, die äußeren Flugbahnen 15 und die Streubreite ST begrenzen ein trapezförmiges Streubild S.

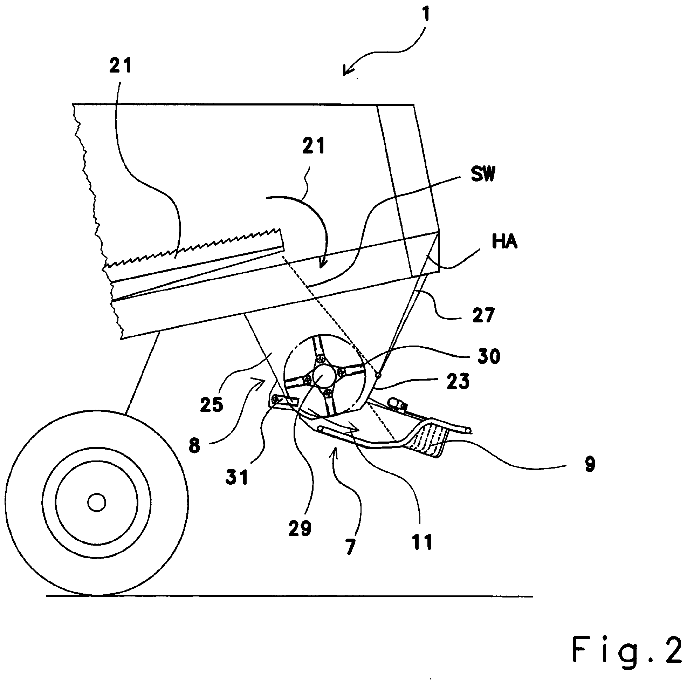

Fig.2 zeigt eine Seitenansicht des rückwärtigen Ausschnitts des Mähdreschers 1. Das von hier nicht näher erläuterten und an sich bekannten Arbeitsorganen im Mähdrescher 1 vom Erntegut abgetrennte Stroh 20 gelangt über Hordenschüttler 21 in den hinteren Bereich des Mähdreschers 1. An einer Gehäuserückwand 23 eines Häckslergehäuses 25 ist eine in zwei Stellungen verschwenkbare Schwadklappe 27 angebracht. In der Schwadstellung SW (gestrichelt dargestellt) rutscht das von den Hordenschüttlern 21 auf die Schwadklappe 27 fallende Stroh 20 über den Anbauhäcksler 7 hinweg und wird im Schwad auf dem Feld abgelegt (nicht dargestellt). In einer Häckselstellung HA der Schwadklappe 27 fällt das Stroh 20 auf das Häckselorgan 8. Das Häckselorgan 8 weist eine rotierende Häckslerwelle 29 auf, die in dem Häckslergehäuse 25 gelagert ist. Die Häckslerwelle 29 ist mit beweglichen Messern 30 besetzt, die mit im in dem Häckslergehäuse 25 fest angeordneten Gegenmessern 31 kämmen. Mit diesen Messern 30, 31 wird das Stroh 20 zu Häckselgut 11 zerkleinert und beschleunigt und mit hoher Geschwindigkeit der Verteileinrichtung 9 zugeführt.

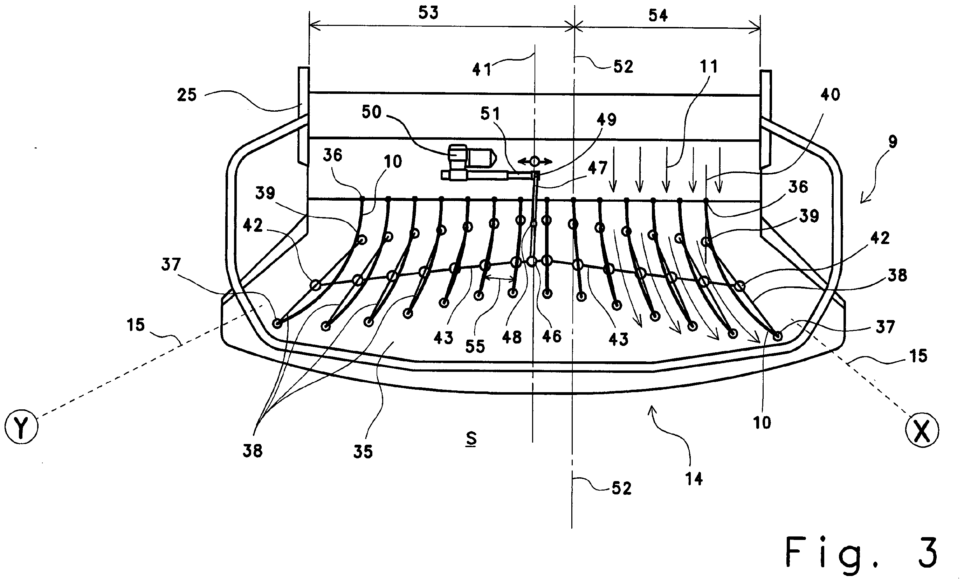

In Fig.3 ist ein Ausschnitt der Draufsicht des hinteren Bereichs des Mähdreschers 1 vergrößert dargestellt. Die Verteileinrichtung 9 besteht aus einem Ablenkgehäuse 35, dessen Querschnitt sich zum Austrittsbereich 14 hin verbreitert. Innerhalb des Ablenkgehäuses 35 sind die noch näher zu beschreibenden, verstellbare Leitbleche 10 angeordnet, welche die austretende Häckselgutmenge 11 in Abhängigkeit von der Lage und / oder Geometrie des Streubilds S ändern. Die Leitbleche 10 werden durch das Ein- und -ausfahren eines Kolbens 51 eines Stellgliedes 50 verstellt. Der Kolben 51 ist am Ende 49 mit einem Hebel 47 gelenkig verbunden, der seinerseits in einem Gelenkpunkt 48 gelagert ist, der auf der Mähdreschersymmetrieachse 41 am Ablenkgehäuses 35 befestigt ist. Durch Druckbeaufschlagung fährt der Kolben 51 der Stelleinheit 50 nach rechts aus und dreht den Hebel 49 im Uhrzeigersinn. Ein am anderen Ende im Gelenkpunkt 46 beweglich mit dem Hebel 49 verbundener Verstellhebel 43 bewegt sich gleichzeitig nach links. Der Verstellhebel 43 ist in den Gelenkpunkten 42 mit mehreren Lenkern 38 unterschiedlicher Länge verbunden, wobei jeder Gelenkpunkt 42 den zugehörigen Lenker 38 im gleichen Verhältnis teilt. Jeder Lenker 38 ist jeweils einzeln in einem Gelenkpunkt 39 drehbar an dem Ablenkgehäuse 35 angeordnet. Durch die Bewegung des Verstellhebels 43 nach links, drehen die Lenker 38 sich gleichzeitig im Uhrzeigersinn um den jeweiligen zugehörigen Gelenkpunkt 39. Die äußeren Enden der Lenker 38 sind im Gelenkpunkt 37 mit den äußeren Enden der Leitbleche 10 verbunden. Jedes Leitblech 10 ist an seinem dem Mähdrescher 1 zugewandtem Ende 36 starr mit dem Ablenkgehäuse 35 verbunden. Die Leitbleche 10 selbst bestehen aus ebenen, relativ dünnen, flexiblen Blechen, die Länge der Bleche nimmt zu den Außenseiten des Ablenkgehäuses 35 hin zu. Das Ende 36 jedes Leitblechs 10 und der Gelenkpunkt 39 des dazugehörigen Lenkers 38 liegen auf einer Verbindungslinie 40, die parallel zur Mähdreschersymmetrieachse 41 verläuft. Die Drehung der Lenker 38 im Uhrzeigersinn bewirkt eine Verlagerung der Gelenkpunkte 37 nach links, wodurch sich gleichzeitig die Krümmungen der Leitbleche 10 ändern bzw. sogar wechseln.

Durch die Verstellung der Leitbleche 10 bewegt sich eine parallel zur Mähdrescherlängsachse 41 verlaufende, imaginäre Neutralachse 52 nach rechts von dem sich weiter nach links bewegenden Endpunkt Y weg.

Die einzelnen Bewegungen erfolgen in umgekehrter Richtung, wenn die Druckbeaufschlagung auf das Stellglied 50 reduziert wird und der Kolben 51 einfährt. Die Neutralachse 52 bewegt sich in diesem Fall nach links von dem sich weiter nach rechts bewegenden Endpunkt X weg.

Das auf der imaginären Neutralachse 52 verlaufende Leitblech 10 ist eben, während die auf der einen Seite 53 der Neutralachse 52 angeordneten Leitbleche 10 linksgekrümmt und die auf der anderen Seite 54 der Neutralachse 52 angeordneten Leitbleche 10 rechtgekrümmt sind. Die auf einer Seite 53, 54 der Neutralachse angeordneten Leitbleche 10 verlaufen parallel und zwischen ihnen besteht ein konstanter Durchgangsquerschnitt 55. Ab einer bestimmten Verstellung des Stellgliedes 50 ändert sich durch die Verschiebung der Neutralachse 52 die Anzahl der auf der jeweiligen Seite 53, 54 angeordneten Leitbleche.

Die Geometrie des Streubereichs S sowie die Abgabe des Häckselgutmenge 11 im Austrittbereich 14 der Verteileinrichtung 9 werden somit über die veränderbare Position der Leitbleche 10 bestimmt. Die veränderbare Position der Leitbleche 10 hat zur Folge, dass die Leitbleche 10 die Häckselgutmenge proportional zur Geometrie des Steubildes S verteilen, wobei die Häckselgutmenge 11 über die Streubreite ST homogen verteilt wird.

Die Erfindung ist nicht auf den beschriebenen Anbauhäcksler 7 für Mähdrescher 1 beschränkt, sondern kann an beliebigen Erntemaschinen eingesetzt werden, um die beschriebenen Effekte zu erzielen.

**Bezugszeichenliste:**

| | | | |
|---|---|---|---|
| 1 | Mähdrescher | 48 | Gelenkpunkt |
| 2 | Schneidwerk | 49 | Ende |
| 4 | Bestand | 50 | Stellglied |
| 5 | Abgeerntetes Feld | 51 | Kolben |
| 7 | Anbauhäcksler | 52 | Neutralachse |
| 8 | Häckselorgan | 53 | Seite |
| 9 | Verteileinrichtung | 54 | Seite |
| 10 | Leitblech | 55 | Durchgangsquerschnitt |
| 11 | Häckselgutmenge | A | Abstand |
| 14 | Austrittsbereich | AF | Austragsfläche |
| 15 | Flugbahn | E | Erntegut |
| 16 | Austragsfläche | SB | Schnittbreite |
| 20 | Stroh | ST | Streubreite |
| 21 | Hordenschüttler | SW | Schwadstellung |
| 23 | Gehäuserückwand | HA | Häckselstellung |
| 25 | Häckslergehäuse | X | Begrenzungspunkt |
| 27 | Schwadklappe | Y | Begrenzungspunkt |
| 29 | Häckslerwelle | S | Streubild |
| 30 | Bewegliche Messer | | |
| 31 | Gegenmesser | | |
| 35 | Ablenkgehäuse | | |
| 36 | Ende Leitblech | | |
| 37 | Gelenkpunkt | | |
| 38 | Lenker | | |
| 39 | Gelenkpunkt | | |
| 40 | Verbindungslinie | | |
| 41 | Mähdreschersymmetrieachse | | |
| 42 | Gelenkpunkt | | |
| 43 | Verstellhebel | | |
| 46 | Gelenkpunkt | | |
| 47 | Hebel | | |

## Patentansprüche

1. Verfahren zum Betreiben einer Erntegutzerkleinerungs- und - verteilvorrichtung, insbesondere Anbauhäcksler (7) für Mähdrescher (1), wobei dem wenigstens einen Häckselorgan (8) zumindest eine Verteileinrichtung (9) nachgeordnet ist, deren mehrere in einem Ablenkgehäuse (8) angeordnete und in ihrer Lage verstellbaren Leitbleche (10) zur Einstellung eines Streubilds (S) einer zu verteilenden Häckselgutmenge (11) dienen, und wobei die Verteileinrichtung (9) eine Neutralachse (52) aufweist, in der die Häckselgutmenge (11) nicht umgelenkt wird, wobei die rechts- und linksseitig der Neutralachse (52) angeordneten Leitbleche (10) eine Gutumlenkung bewirken,
**dadurch gekennzeichnet;**
**dass** die aus dem Häckselorgan (8) austretende Häckselgutmenge (11) zumindest im Austrittsbereich (14) der Verteileinrichtung (9) in Abhängigkeit von der Lage und/ oder Geometrie des Streubilds (S) änderbar ist, wobei die Änderung durch die Verlagerung der Neutralachse (52) erfolgt, wobei ein auf der imaginären Neutralachse (52) verlaufendes Leitblech (10) eben ist, während die auf der einen Seite (53) der Neutralachse (52) angeordneten Leitbleche (10) linksgekrümmt und die auf der anderen Seite (54) der Neutralachse (52) angeordneten Leitbleche (10) rechtgekrümmt sind und wobei ab einer bestimmten Verstellung eines Stellgliedes (50) durch die Verschiebung der Neutralachse (52) die Anzahl der auf der jeweiligen Seite (53, 54) angeordneten Leitbleche (10) verändert wird.

2. Verfahren nach Anspruch 1,
**dadurch gekennzeichnet,**
**dass** die Abgabe der Häckselgutmenge (11) im Austrittsbereich (14) der Verteileinrichtung (9) durch die veränderbare Position der Leitbleche (10) bestimmt wird.

3. Verfahren nach Anspruch 1,
**dadurch gekennzeichnet,**
**dass** die Geometrie und die Lage des Streubildes (S) durch die veränderbare Position der Leitbleche (10) bestimmt wird.

4. Verfahren nach wenigstens einem der vorhergehenden Ansprüche,
**dadurch gekennzeichnet,**
**dass** die Leitbleche (10) die Häckselgutmenge (11) proportional zur Geometrie und Lage des Streubildes (S) verteilen, wobei die Häckselgutmenge (11) über eine von dem Streubild (S) bestimmte Streubreite (ST) annähernd homogen verteilt wird.

5. Verfahren nach einem der vorangehenden Ansprüche,
**dadurch gekennzeichnet,**
**dass** die Verlagerung der Neutralachse (52) durch die Verstellung der Leitbleche (10) erfolgt.

6. Verfahren nach wenigstens einem der vorhergehenden Ansprüche,
**dadurch gekennzeichnet,**
**dass** das Streubild (S) durch rechte und linke Begrenzungspunkte (X, Y) definiert ist und die Neutralachse (52) sich stets von dem weiter nach Außen bewegenden Begrenzungspunkt (X, Y) wegbewegt wird.

7. Vorrichtung zum Betreiben einer Erntegutzerkleinerungs- und - verteilvorrichtung, insbesondere Anbauhäcksler (7) für Mähdrescher (1), wobei dem wenigstens einen Häckselorgan (8) zumindest eine Verteileinrichtung (9) nachgeordnet ist, deren mehrere in einem Ablenkgehäuse (35) angeordnete und in ihrer Lage verstellbaren Leitbleche (10) zur Einstellung eines Streubilds (S) einer zu verteilenden Häckselgutmenge (11) dienen, und wobei die Verteileinrichtung (9) eine Neutralachse (52) aufweist, in der die Häckselgutmenge (11) nicht umgelenkt wird, wobei die rechts- und linksseitig der Neutralachse (52) angeordneten Leitbleche (10) eine Gutumlenkung bewirken,
**dadurch gekennzeichnet;**
**dass** die lageveränderlichen Leitbleche (10) über einen Verstellhebel (43) verschwenkbar miteinander gekoppelt sind und der Verstellhebel (43) von einem Stellglied (50) antreibbar geführt wird, wobei die aus dem Häckselorgan (8) austretende Häckselgutmenge (11) zumindest im Austrittsbereich (14) der Verteileinrichtung (9) in Abhängigkeit von der Lage und/ oder Geometrie des Streubilds (S) änderbar ist, wobei die Änderung durch die Verlagerung der Neutalachse erfolgt, wobei ein auf der imaginären Neutralachse (52) verlaufendes Leitblech (10) eben ist, während die auf der einen Seite (53) der Neutralachse (52) angeordneten Leitbleche (10) linksgekrümmt und die auf der anderen Seite (54) der Neutralachse (52) angeordneten Leitbleche (10) rechtgekrümmt sind und wobei ab einer bestimmten Verstellung eines Stellgliedes (50) durch die Verschiebung der Neutralachse (52) die Anzahl der auf der jeweiligen Seite (53, 54) angeordneten Leitbleche (10) verändert wird.

8. Vorrichtung nach Anspruch 7,
**dadurch gekennzeichnet,**
**dass** die auf einer Seite (53, 54) der Neutralachse (52) angeordneten Leitbleche (10) parallel verlaufen und zwischen benachbarten Leitblechen (10) auf der jeweiligen Seite (53, 54) ein konstanter Durchgangsquerschnitt (55) besteht.

9. Vorrichtung nach wenigstens einem der vorangegangenen Ansprüche,
**dadurch gekennzeichnet,**
**dass** die Länge der Leitbleche (10) zur Außenseite des Ablenkgehäuses (35) zunimmt.

## Claims

1. Method for operating a crop comminution and distribution device, in particular a chopper attachment (7) for a combine harvester (1), wherein at least one distribution device (9) is arranged downstream of the at least one chopping component (8), several guide plates (10) of which, arranged in a deflection housing (8) and adjustable in their position, serve for setting a spread pattern (S) of a quantity of chopped material (11) to be distributed, and wherein the distribution device (9) has a neutral axis (52), at which the quantity of chopped material (11) is not deflected, wherein the guide plates (10) arranged on the right and left side of the neutral axis (52) effect a deflection of material,
**characterized in that**
the quantity of chopped material (11) exiting from the chopping component (8) is alterable at least in the exit area (14) of the distribution device (9) depending on the position and/or geometry of the spread pattern (S), wherein the alteration is effected through the shifting of the neutral axis (52), wherein a guide plate (10) running on the imaginary neutral axis (52) is level, while the guide plates (10) arranged on one side (53) of the neutral axis (52) are bent to the left and the guide plates (10) arranged on the other side (54) of the neutral axis (52) are bent to the right and wherein, from a specific adjustment of a control element (50) through the displacement of the neutral axis (52), the number of the guide plates (10) arranged on the respective side (53, 54) is altered.

2. Method according to claim 1,
**characterized in that**
the discharge of the quantity of chopped material (11) in the exit area (14) of the distribution device (9) is determined through the alterable position of the guide plates (10).

3. Method according to claim 1,
**characterized in that**
the geometry and the position of the spread pattern (S) are determined through the alterable position of the guide plates (10).

4. Method according to at least one of the preceding claims,
**characterized in that**
the guide plates (10) distribute the quantity of chopped material (11) in proportion to the geometry and position of the spread pattern (S), wherein the quantity of chopped material (11) is distributed approximately homogeneously over a spread width (ST) determined by the spread pattern (S).

5. Method according to one of the preceding claims,
**characterized in that**
the shifting of the neutral axis (52) is effected through the adjustment of the guide plates (10).

6. Method according to at least one of the preceding claims,
**characterized in that**
the spread pattern (S) is defined by right and left limit points (X, Y) and the neutral axis (52) is constantly moved away from the limit point (X, Y) moving further outwards.

7. Device for operating a crop comminution and distribution device, in particular a chopper attachment (7) for a combine harvester (1), wherein at least one distribution device (9) is arranged downstream of the at least one chopping component (8), the several guide plates (10) of which, arranged in a deflection housing (35) and adjustable in their position, serve for setting a spread pattern (S) of a quantity of chopped material (11) to be distributed, and wherein the distribution device (9) has a neutral axis (52), at which the quantity of chopped material (11) is not deflected, wherein the guide plates (10) arranged on the right and left side of the neutral axis (52) effect a deflection of material,
**characterized in that**;
the position-alterable guide plates (10) are pivotably coupled to each other via an adjustment lever (43) and the adjustment lever (43) is drivably guided by a control element (50), wherein the quantity of chopped material (11) exiting from the chopping component (8) is alterable at least in the exit area (14) of the distribution device (9) depending on the position and/or geometry of the spread pattern (S), wherein the alteration is effected through the shifting of the neutral axis, wherein a guide plate (10) running on the imaginary neutral axis (52) is level, while the guide plates (10) arranged on one side (53) of the neutral axis (52) are bent to the left and the guide plates (10) arranged on the other side (54) of the neutral axis (52) are bent to the right and wherein, from a specific adjustment of a control element (50) through the displacement of the neutral axis (52), the number of the guide plates (10) arranged on the respective side (53, 54) is varied.

8. Device according to claim 7,
**characterized in that**
the guide plates (10) arranged on one side (53, 54) of the neutral axis (52) run parallel and there is a constant flow cross section (55) between adjacent guide plates (10) on the respective side (53, 54).

9. Device according to at least one of the preceding claims,
**characterized in that**
the length of the guide plates (10) increases towards the outside of the deflection housing (35).

## Revendications

1. Procédé pour exploiter un dispositif de broyage et d'éparpillement de produit récolté, en particulier hache-paille rapporté (7) pour moissonneuse-batteuse (1), dans lequel en aval du au moins un organe de hachage (8) est disposé au moins un équipement d'éparpillement (9) dont plusieurs tôles déflectrices (10) disposées dans un carter de déviation (8) et réglables sur le plan de leur position servent à établir une image d'éparpillement (S) d'une quantité de produit haché (11) à éparpiller, et dans lequel l'équipement d'éparpillement (9) comporte un axe neutre (52) sur lequel la quantité de produit haché (11) n'est pas défléchie, les tôles déflectrices (10) disposées à droite et à gauche de l'axe neutre (52) provoquant une déviation de produit, **caractérisé en ce que** la quantité de produit haché (11) sortant de l'organe de hachage (8) est variable au moins dans la zone de sortie (14) de l'équipement d'éparpillement (9) en fonction de la position et/ou géométrie de l'image d'éparpillement (S), la variation s'effectuant en déplaçant l'axe neutre (52), une tôle déflectrice (10) s'étendant selon l'axe neutre imaginaire (52) étant plane, tandis que les tôles déflectrices (10) disposées sur l'un des côtés (53) de l'axe neutre (52) sont courbées à gauche et les tôles déflectrices (10) disposées sur l'autre côté (54) de l'axe neutre (52) sont courbées à droite, et, à partir d'un réglage déterminé d'un actionneur (50), le nombre de tôles déflectrices (10) disposées de chaque côté (53, 54) est modifié par le déplacement de l'axe neutre (52).

2. Procédé selon la revendication 1, **caractérisé en ce que** le rejet de la quantité de produit haché (11) dans la zone de sortie (14) de l'équipement d'éparpillement (9) est déterminé par la position variable des tôles déflectrices (10).

3. Procédé selon la revendication 1, **caractérisé en ce que** la géométrie et la position de l'image d'éparpillement (S) est déterminée par la position variable des tôles déflectrices (10).

4. Procédé selon au moins une des revendications précédentes, **caractérisé en ce que** les tôles déflectrices (10) éparpillent la quantité de produit haché (11) proportionnellement à la géométrie et à la position de l'image d'éparpillement (S), la quantité de produit haché (11) étant répartie de manière sensiblement homogène sur une largeur d'éparpillement (ST) déterminée par l'image d'éparpillement (S).

5. Procédé selon une des revendications précédentes, **caractérisé en ce que** le déplacement de l'axe neutre (52) s'effectue en réglant les tôles déflectrices (10).

6. Procédé selon au moins une des revendications précédentes, **caractérisé en ce que** l'image d'éparpillement (S) est définie par l'intermédiaire de points de limitation droit et gauche, et l'axe neutre (52) s'éloigne toujours du point de limitation (X, Y) qui se déplace le plus vers l'extérieur.

7. Dispositif pour exploiter un dispositif de broyage et d'éparpillement, en particulier hache-paille rapporté (7) pour moissonneuse-batteuse (1), dans lequel en aval du au moins un organe de hachage (8) est disposé au moins un équipement d'éparpillement (9) dont plusieurs tôles déflectrices (10) disposées dans un carter de déviation (35) et réglables sur le plan de leur position servent à établir une image d'éparpillement (S) d'une quantité de produit haché (11) à éparpiller, et dans lequel l'équipement d'éparpillement (9) comporte un axe neutre (52) sur lequel la quantité de produit haché (11) n'est pas défléchie, les tôles déflectrices (10) disposées à droite et à gauche de l'axe neutre (52) provoquant une déviation de produit, **caractérisé en ce que** les tôles déflectrices à position variable (10) sont couplées entre elles de manière pivotante par l'intermédiaire d'un levier de réglage (43), et le levier de réglage (43) est guidé de manière entraînable par un actionneur (50), la quantité de produit haché (11) sortant de l'organe de hachage (8) étant variable au moins dans la zone de sortie (14) de l'équipement d'éparpillement (9) en fonction de la position et/ou géométrie de l'image d'éparpillement (S), la variation s'effectuant en déplaçant l'axe neutre, une tôle déflectrice (10) s'étendant selon l'axe neutre imaginaire (52) étant plane, tandis que les tôles déflectrices (10) disposées sur l'un des côtés (53) de l'axe neutre (52) sont courbées à gauche et les tôles déflectrices (10) disposées sur l'autre côté (54) de l'axe neutre (52) sont courbées à droite, et, à partir d'un réglage déterminé d'un actionneur (50), le nombre de tôles déflectrices (10) disposées de chaque côté (53, 54) est modifié par le déplacement de l'axe neutre (52).

8. Dispositif selon la revendication 7, **caractérisé en ce que** les tôles déflectrices (10) disposées sur un côté (53, 54) de l'axe neutre (52) s'étendent parallèlement, et entre des tôles déflectrices voisines (10) sur un côté respectif (53, 54) existe une section de passage constante (55) .

9. Dispositif selon au moins une des revendications précédentes, **caractérisé en ce que** la longueur des tôles déflectrices (10) augmente vers le côté extérieur du carter de déviation (35).
